# EUROPEAN PATENT APPLICATION

(11) **EP 4 682 734 A1**
(43) Date of publication of application: **21.01.2026**
(21) Application number: 24778250.1
(22) Date of filing: 29.03.2024
(51) Int. Cl.: G06F 16/18

(54) **DATABASE SYSTEM AND DATA MANAGEMENT METHOD THEREFOR**

(30) Priority: 31.03.2023 CN 202310339861; 09.06.2023 CN 202310684553
(71) Applicant: Huawei Cloud Computing Technologies Co., Ltd., Guiyang, Guizhou 550025 (CN); University of Science and Technology of China, Anhui 230026 (CN)
(72) Inventor: ZUO, Shun, Hefei, Anhui 230026 (CN); LI, Yongkun, Hefei, Anhui 230026 (CN); CHEN, Xusheng, Guiyang, Guizhou 550025 (CN); FENG, Yazhi, Guiyang, Guizhou 550025 (CN)
(74) Representative: Thun, Clemens
(86) International application number: PCT/CN2024/084876
(87) International publication number: WO 2024/199464

(57) **Abstract**

This application discloses a database system and a data management method therefor, and belongs to the field of database technologies. The database system includes a client, a plurality of database nodes, and a storage resource, and the plurality of database nodes include a first database node. The client is configured to send a first write request of a target transaction to the first database node, where the first write request indicates to-be-written first data. The first database node is configured to send a first write response to the client based on the first write request, where the first write response carries a first write operation log of the first data. The client is further configured to persist the first write operation log based on the storage resource. In this application, a latency of processing the transaction by the client is reduced, to address an excessively long latency of processing the transaction by the client, and reduce persistence load of the database node.

## Description

This application claims priorities to Chinese Patent Application No. 202310339861.1, filed on March 31, 2023 and entitled "DATABASE MANAGEMENT METHOD", and to Chinese Patent Application No. 202310684553.2, filed on June 9, 2023 and entitled "DATABASE SYSTEM AND DATA MANAGEMENT METHOD THEREFOR", both of which are incorporated herein by reference in their entireties.

### TECHNICAL FIELD

This application relates to the field of database technologies, and in particular, to a database system and a data management method therefor.

### BACKGROUND

Currently, in a transaction processing process of a database system, a plurality of database nodes need to participate and collaborate in processing. In addition, in the transaction processing process, after receiving a write request from a client, both a coordinator node and a participant node need to first perform corresponding persistence operations, and then return corresponding write responses to the client. The persistence operation is on a key path in the transaction processing process, leading to an excessively long end-to-end latency of a single transaction.

### SUMMARY

This application provides a database system and a data management method therefor. In this application, a latency of processing a transaction by a client is reduced, to address an excessively long latency of processing the transaction by the client, and reduce persistence load of a database node. The technical solutions provided in this application are as follows.

According to a first aspect, this application provides a database system. The database system includes a client, a plurality of database nodes, and a storage resource, and the plurality of database nodes include a first database node. The client is configured to send a first write request of a target transaction to the first database node, where the first write request indicates to-be-written first data. The first database node is configured to send a first write response to the client based on the first write request, where the first write response carries a first write operation log of the first data. The client is further configured to persist the first write operation log based on the storage resource.

In the database system, the client persists the first write operation log, so that the first database node can send the write response to the client without persisting the first write operation log. In this way, the client can send a next write request as soon as possible, and a latency of processing the transaction by the client is reduced, to address an excessively long latency of processing the transaction by the client, and reduce persistence load of the database node.

Optionally, the plurality of database nodes further include a second database node. The client is further configured to send a second write request of the target transaction to the second database node, where the second write request indicates to-be-written second data. The second database node is configured to send a second write response to the client based on the second write request, where the second write response carries a second write operation log of the second data. The client is specifically configured to perform persist the first write operation log and the second write operation log in a batch based on the storage resource. In this way, a quantity of persistence requests sent by the client to the storage resource can be reduced, and a total quantity of requests that need to be sent by the database system to process a single transaction can be reduced, thereby providing a high maximum throughput rate for the database system.

In an implementation, the client and the database node have exclusive storage resources. The exclusive resources of the client and the database node may be obtained through pre-declaration. In this case, the client is specifically configured to persist the write operation log in the exclusive storage resource of the client. In addition, when persisting the write operation log in the storage resource, the client may write the write operation log into the storage resource through append write. In this way, when the client persists the write operation log in the exclusive storage resource of the client, data stored in the exclusive resource is all write operation logs. When the target transaction has a plurality of write operation logs, the plurality of write operation logs are continuously stored in the storage resource. When all the write operation logs of the target transaction need to be read, the plurality of write operation logs of the target transaction can be sequentially read in the exclusive storage resource, so that time taken to read the write operation logs can be shortened, and a read speed of the write operation logs can be ensured.

In the database system, the plurality of database nodes include a coordinator node and a participant node. The client is further configured to provide all the write operation logs of the target transaction for the coordinator node. The coordinator node is configured to: obtain, based on all the write operation logs, a third write operation log for which the coordinator node is responsible, and persist the third write operation log based on the storage resource. The coordinator node is further configured to: obtain, based on all the write operation logs, a fourth write operation log for which the participant node is responsible, and send the fourth write operation log to the participant node. The participant node is configured to persist the fourth write operation log based on the storage resource.

In this way, both the coordinator node and the participant node can persist the write operation logs for which the coordinator node and the participant node are responsible. When the write operation logs need to be used, for example, when the transaction needs to be recovered based on the write operation logs, both the coordinator node and the participant node can obtain, from the respective storage resources, the write operation logs persisted by the coordinator node and the participant node, and perform related processing based on the obtained write operation logs, without obtaining the write operation log persisted by the client or repeatedly reading the storage resource of the client and the storage resources of the coordinator node and the participant node. This helps improve an execution speed of an operation performed based on the write operation log.

To ensure that the coordinator node can obtain the write operation logs of the target transaction, the client is further configured to provide storage addresses of all the write operation logs for the coordinator node.

When the coordinator node has the exclusive storage resource, the coordinator node is specifically configured to persist the third write operation log in the exclusive storage resource of the coordinator node; and/or when the participant node has the exclusive storage resource, the participant node is specifically configured to persist the fourth write operation log in the exclusive storage resource of the participant node. In addition, the coordinator node and/or the participant node may write the write operation logs/write operation log into the storage resources/storage resource through append write. In this way, when the database node persists the write operation log in the exclusive storage resource of the database node, data stored in the exclusive storage resource is related information of a transaction (for example, a transaction state) and the write operation log, and the related information of the transaction and the write operation log are continuously stored in the storage resource in a time sequence. When the related information of the target transaction and the write operation log need to be obtained, the related information of the target transaction and the write operation log can be sequentially read from the exclusive storage resource, to ensure the read speed. For example, when the target transaction needs to be recovered, a state of the target transaction usually needs to be queried first, and whether the transaction needs to be recovered based on the write operation log persisted by the database node is determined based on the state. When the transaction needs to be recovered based on the write operation log persisted by the database node, the write operation log persisted by the database node can be sequentially read after a storage address of the state of the target transaction. This can shorten time taken to read the state and the write operation log, and help ensure a transaction recovery speed.

In an implementation, any one of the plurality of data nodes is further configured to: when the target transaction needs to be recovered, obtain a current state of the target transaction, and execute a process of recovering the target transaction based on the current state.

The coordinator node is specifically configured to: when the current state indicates that the target transaction is in an in progress state, after receiving a write request from the client, send, to the client, a write response that indicates to re-execute the target transaction; when the current state indicates that the target transaction is in a committed state, obtain a write operation log persisted by the client, and perform a replay operation based on the write operation log persisted by the client; and when the current state indicates that the target transaction is in a finalized state, obtain the third write operation log, and perform the replay operation based on the third write operation log.

Optionally, the coordinator node is further configured to: when the current state indicates that the target transaction is in the committed state, obtain, based on the write operation log persisted by the client, the fourth write operation log for which the participant node is responsible, and send the fourth write operation log to the participant node. The participant node is further configured to persist the fourth write operation log based on the storage resource.

The participant node is specifically configured to: when the current state indicates that the participant node has persisted a write operation log of the target transaction, perform a replay operation based on the fourth write operation log; when the current state indicates that the participant node does not persist the write operation log of the target transaction, if receiving, within specified duration, the fourth write operation log for which the participant node is responsible, perform the replay operation based on the fourth write operation log; and when the current state indicates that the participant node does not persist the write operation log of the target transaction, and the fourth write operation log for which the participant node is responsible is not received within the specified duration, after receiving a write request of the client, send, to the client, a write response that indicates to re-execute the target transaction.

After the coordinator node and the participant node persist the write operation logs for which the coordinator node and the participant node are responsible, two copies of the write operation logs of the transaction are actually stored. The client persists a first copy, and the coordinator node and the participant node persist the second copy. This facilitates use of the write operation log, but causes redundant storage. To reduce storage space overheads, the database system provided in embodiments of this application further has a storage space reclaiming mechanism. In an implementation, the coordinator node is further configured to: when the target transaction is finalized, send a reclaiming request for storage space to the client, where the reclaiming request carries indication information of the storage space. The client is further configured to reclaim the storage space based on the reclaiming request.

Optionally, the indication information is an address of the storage space.

According to a second aspect, this application provides a data management method for a database system. The database system includes a client, a plurality of database nodes, and a storage resource, and the plurality of database nodes include a first database node. The method includes: The client sends a first write request of a target transaction to the first database node, where the first write request indicates to-be-written first data. The first database node sends a first write response to the client based on the first write request, where the first write response carries a first write operation log of the first data. The client persists the first write operation log based on the storage resource.

Optionally, the plurality of database nodes further include a second database node, and the method further includes: The client sends a second write request of the target transaction to the second database node, where the second write request indicates to-be-written second data. The second database node sends a second write response to the client based on the second write request, where the second write response carries a second write operation log of the second data. That the client persists the first write operation log based on the storage resource includes: The client persists the first write operation log and the second write operation log in a batch based on the storage resource.

Optionally, that the client persists the first write operation log based on the storage resource includes: The client persists the write operation log in the exclusive storage resource of the client.

Optionally, the plurality of database nodes include a coordinator node and a participant node, and the method further includes: The client provides all write operation logs of the target transaction for the coordinator node. The coordinator node obtains, based on all the write operation logs, a third write operation log for which the coordinator node is responsible, and persists the third write operation log based on the storage resource. The coordinator node obtains, based on all the write operation logs, a fourth write operation log for which the participant node is responsible, and sends the fourth write operation log to the participant node. The participant node persists the fourth write operation log based on the storage resource.

Optionally, the method further includes: The client provides storage addresses of all the write operation logs for the coordinator node.

Optionally, the coordinator node persists the third write operation log in an exclusive storage resource of the coordinator node, and/or the participant node persists the fourth write operation log in an exclusive storage resource of the participant node.

Optionally, data in the storage resource is written through append write.

Optionally, the method further includes: When the target transaction needs to be recovered, any one of the plurality of data nodes obtains a current state of the target transaction, and executes a process of recovering the target transaction based on the current state.

Optionally, that the coordinator node executes the process of recovering the target transaction based on the current state includes: when the current state indicates that the target transaction is in an in progress state, after a write request is received from the client, sending, to the client, a write response that indicates to re-execute the target transaction; when the current state indicates that the target transaction is in a committed state, obtaining a write operation log persisted by the client, and performing a replay operation based on the write operation log persisted by the client; and when the current state indicates that the target transaction is in a finalized state, obtaining the third write operation log, and performing the replay operation based on the third write operation log.

Optionally, the method further includes: When the current state indicates that the target transaction is in the committed state, the coordinator node obtains, based on the write operation log persisted by the client, the fourth write operation log for which the participant node is responsible, and sends the fourth write operation log to the participant node. The participant node persists the fourth write operation log based on the storage resource.

Optionally, that the participant node executes the process of recovering the target transaction based on the current state includes: when the current state indicates that the participant node has persisted a write operation log of the target transaction, performing a replay operation based on the fourth write operation log; when the current state indicates that the participant node does not persist the write operation log of the target transaction, if the fourth write operation log for which the participant node is responsible is received within specified duration, performing the replay operation based on the fourth write operation log; and when the current state indicates that the participant node does not persist the write operation log of the target transaction, and the fourth write operation log for which the participant node is responsible is not received within the specified duration, after receiving a write request of the client, sending, to the client, a write response that indicates to re-execute the target transaction.

Optionally, after the participant node persists the fourth write operation log based on the storage resource, the method further includes: When the target transaction is finalized, the coordinator node sends a reclaiming request for storage space to the client, where the reclaiming request carries indication information of the storage space. The client reclaims the storage space based on the reclaiming request.

Optionally, the indication information is an address of the storage space.

According to a third aspect, this application provides a computing device, including a memory and a processor. The memory stores program instructions, and the processor runs the program instructions to implement the client, the database node, or the storage resource in the system provided in any one of the first aspect and the possible implementations of the first aspect in this application.

According to a fourth aspect, this application provides a computing device cluster, including a plurality of computing devices. The plurality of computing devices include a plurality of processors and a plurality of memories, the plurality of memories store program instructions, and the plurality of processors run the program instructions, so that the computing device cluster implements the system provided in any one of the first aspect and the possible implementations of the first aspect in this application.

According to a fifth aspect, this application provides a computer-readable storage medium. The computer-readable storage medium is a non-volatile computer-readable storage medium. The computer-readable storage medium includes program instructions. When the program instructions are run on a computing device, the computing device is enabled to perform the system according to any one of the first aspect and the possible implementations of the first aspect in this application.

According to a sixth aspect, this application provides a computer program product including instructions. When the computer program product runs on a computer, the computer is enabled to perform the system according to any one of the first aspect and the possible implementations of the first aspect in this application.

### BRIEF DESCRIPTION OF DRAWINGS

FIG. 1 is a diagram of a structure of an implementation scenario related to a data management method for a database system according to an embodiment of this application;
FIG. 2 is a diagram of a storage-compute coupled architecture according to an embodiment of this application;
FIG. 3 is a diagram of a storage-compute decoupled architecture according to an embodiment of this application;
FIG. 4A and FIG. 4B are a flowchart of a data management method for a database system according to an embodiment of this application;
FIG. 5 is a diagram of a transaction execution process in a data management method for a database system according to an embodiment of this application;
FIG. 6 is a diagram of data persisted by a client, a first database node, and a second database node in a transaction execution process according to an embodiment of this application;
FIG. 7 is a diagram of recovering a transaction by a coordinator node according to an embodiment of this application;
FIG. 8 is a diagram of recovering a transaction by a participant node according to an embodiment of this application;
FIG. 9 is a diagram of managing storage resource usage based on a hash linked list according to an embodiment of this application;
FIG. 10 is a diagram of a structure of a computing device according to an embodiment of this application; and
FIG. 11 is a diagram of a structure of a computing device cluster according to an embodiment of this application.

### DESCRIPTION OF EMBODIMENTS

To make the objectives, technical solutions, and advantages of this application clearer, the following further describes the implementations of this application in detail with reference to the accompanying drawings.

This specification describes the technical solutions of this application in detail from a plurality of perspectives such as an implementation scenario, a system composition, a method procedure, and a hardware apparatus.

The following first describes application scenarios of embodiments of this application by using examples.

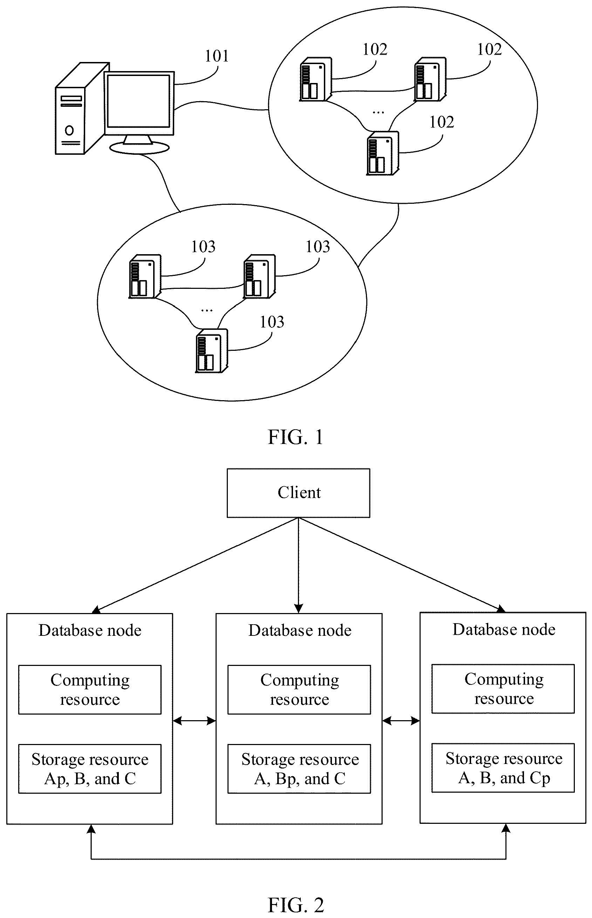

FIG. 1 is a diagram of a structure of an implementation scenario related to a data management method for a database system according to an embodiment of this application. As shown in FIG. 1, the implementation scenario includes the database system. The database system includes a client (client) 101, a plurality of database nodes 102, and storage resources 103. A communication connection can be established between every two of the client 101, the database node 102, and the storage resource 103. For example, a communication connection may be established between the client 101 and the database node 102 through a network, a communication connection may be established between the client 101 and the storage resource 103 through a network, and a communication connection may be established between the storage resource 103 and the database node 102 through a network. Optionally, the network may be a local area network, the internet, or another network. This is not limited in embodiments of this application.

The client 101 is configured to send a statement of a transaction to the database node. In this specification, the client 101 refers to a node that directly communicates with the database node, and may be a gateway node of the system, or may be a client node on which a client is installed. For example, the client may be a gateway server of the entire database system, or may be a client agent cluster that supports dynamic scaling. Optionally, the client node may be a computer, a personal computer, a laptop computer, a mobile phone, a smartphone, a tablet computer, a cloud host, a portable mobile terminal, a multimedia player, an e-book reader, a wearable device, a smart home appliance, an artificial intelligence device, a smart wearable device, a smart vehicle-mounted device, an internet of things device, or the like.

The database node 102 is configured to process a read/write request in the transaction. The database node 102 may be one server, a server cluster including several servers, or a cloud computing service center. A large quantity of basic resources of a cloud service provider are deployed in the cloud computing service center. For example, computing resources, storage resources, and network resources are deployed in the cloud computing service center. The cloud computing service center may implement, based on the large quantity of basic resources, the data management method for the database system provided in this embodiment of this application.

When the database node 102 is implemented by using the cloud computing service center, a user may access a cloud platform and use a database function provided by a database system 10. In this case, the database function provided by the database system 10 for the user may be abstracted by the cloud service provider into a database cloud service on the cloud platform. After the user purchases the database cloud service on the cloud platform, the cloud platform can use a resource of the cloud computing service center to provide the database cloud service by using the data management method for the database system provided in this embodiment of this application. In addition, the database cloud service may be provided as an independent cloud service, or may be provided as an additional service of another cloud service. Optionally, the cloud platform may be a cloud platform of a central cloud, a cloud platform of an edge cloud, or a cloud platform including a central cloud and an edge cloud. This is not specifically limited in embodiments of this application. It should be noted that, in the implementation scenario shown in FIG. 1, the database node 102 may alternatively be implemented by using a resource platform other than the cloud platform. This is not specifically limited in embodiments of this application.

The storage resource 103 is a storage medium configured to store data in the database system, and is also referred to as persistent storage (persistent storage). A high storage resource may be a persistent storage medium like a non-volatile memory (non-volatile memory, NVM), a solid-state drive (solid-state drive, SSD), or a hard disk drive (Hard Disk Drive, HDD). This is not specifically limited in embodiments of this application.

In an implementation form, the storage resource 103 may be a storage pool implemented by using a plurality of servers. In addition, the storage resource 103 may be a storage resource used as a server of the database node 102, that is, the storage resource 103 is equivalent to a medium for storing a data copy in the database node 102. In this case, the database system 10 is of a storage-compute coupled architecture. Alternatively, the storage resource 103 may be a storage resource independent of the server used as the database node 102. The storage resource 103 may be considered as a remote storage pool of the database node 102, and all database nodes 102 can access the storage resource 103. In this case, the database system 10 is of a storage-compute decoupled architecture.

In the storage-compute coupled architecture, a computing node is also a storage node. FIG. 2 is a diagram of implementing a plurality of copies of data in a storage-compute coupled architecture according to an embodiment of this application. As shown in FIG. 2, a computing resource and a storage resource are configured in a database node. The database node uses the computing resource of the database node to process a transaction, and uses the storage resource of the database node to store data. In the storage-compute coupled architecture, to improve data availability, a database system usually performs multi-backup replication on data between different database nodes. To ensure consistency between a plurality of copies, a corresponding consensus algorithm like the Raft or Paxos protocol is usually used. Ap, Bp, and Cp are primary copies of corresponding data blocks respectively. When a client wants to write data A, the client sends a request only to a node including Ap, that is, a node configured with a persistent memory (persistent memory, PM) 1 in FIG. 2. When receiving a write request, the database node sends requests to two nodes on the right, that is, nodes configured with the PM 1 and a PM 2 in FIG. 2, to request the nodes to update A. After receiving a success response, the node configured with the PM 1 writes local Ap data, and finally returns a response to the client.

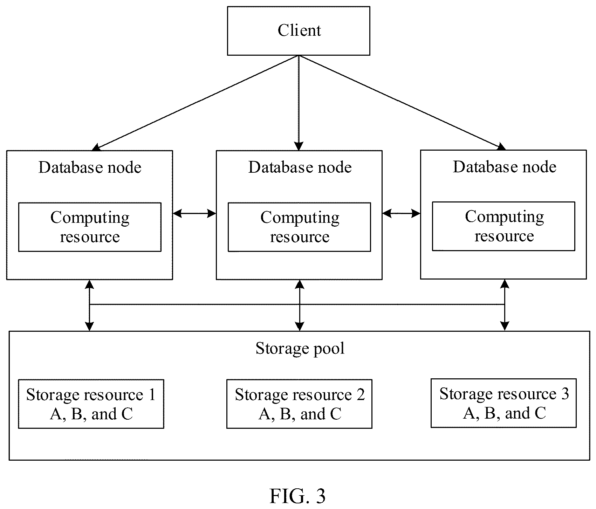

In a storage-compute decoupled architecture, a computing node is independent of a storage node. FIG. 3 is a diagram of a storage-compute decoupled architecture according to an embodiment of this application. As shown in FIG. 3, a database node is responsible for transaction processing, a storage node is responsible for data storage, and a storage resource of the storage node can be used by the database node. In the storage-compute decoupled architecture, when a client wants to write data A, the client only needs to send a request to a corresponding database node. After receiving the request from the client, the database node concurrently sends a data write request to the storage node to implement redundant data storage. Data is stored in a redundancy manner (for example, stored in a plurality of copies or based on erasure code (erasure code, EC)), so that data reliability can be improved. In addition, when the database system provided in embodiments of this application is of the storage-compute decoupled architecture, the database system can be further deployed based on a cloud resource. For example, a storage resource and a database node of the database system are deployed based on the cloud resource, to efficiently and simply deploy the database system.

In a process in which the database system processes a transaction, database nodes participating in the transaction processing may be classified into a transaction coordinator (coordinator) node (referred to as a coordinator node) and a transaction participant (participant) node (referred to as a participant node). Both the coordinator node and the participant node are database nodes used to process a read/write request in the transaction. The coordinator node and the participant node have same physical configurations, but have some differences in operations that need to be performed for processing the transaction. Both the coordinator node and the participant node respond to the write request. In addition, the coordinator node further undertakes a function of committing the transaction, and further maintains related meta information of the transaction, for example, information like a transaction state. Usually, when the client needs to send a plurality of write requests to process the transaction, a database node that receives a first write request is the coordinator node, and a database node that receives remaining write requests is the participant node.

In an implementation, the data management method for the database system provided in embodiments of this application may be implemented by running an executable program by the client 101 and the database node 102 in the database system. For example, the executable program of the data management method for the database system may be presented in a form of an application installation package. After the application installation package is installed on the client 101, a function of the client 101 in the data management method can be implemented by running the executable program. After the application installation package is installed on the database node 102, a function of the database node 102 in the data management method can be implemented by running the executable program.

It should be understood that the foregoing content is examples for describing the implementation scenarios of the data management method for the database system provided in embodiments of this application, and does not constitute any limitation on the implementation scenarios of the data management method for the database system. A person of ordinary skill in the art can learn that, as service requirements change, the implementation scenarios of the data management method for the database system may be adjusted based on application requirements, and are not enumerated one by one in embodiments of this application.

The following describes a process in which a current database system processes a transaction. It is assumed that a client sends two write requests in the transaction processing process, and the two write requests are separately mapped to different database nodes. The transaction processing process includes the following steps.

Step S1: The client sends a first write request to a database node.

Step S2: After receiving the write request, the database node becomes a coordinator node of a write transaction of the client. The coordinator node first creates a transaction record internally, and stores related information of the transaction, for example, a transaction state and a key corresponding to the write request. After creating the transaction record, the coordinator node checks another transaction in a memory, and determines whether a read-write conflict, a write-write conflict, or the like exists. If a conflict is detected, a write response carrying retry abort information is sent to the client. Otherwise, the transaction state is persisted to in progress (inProgress), and a write operation log of the write request is persisted. After persisting is finalized, a write response that indicates that persisting is finalized is sent to the client, so that the client can send a next write request. inProgress indicates that the transaction is being executed. When the coordinator node receives a write operation of a transaction for a first time, it indicates that the client starts a new transaction. The coordinator node records that the transaction is in the inProgress state, to indicate that the transaction is being processed. The write operation log stores data of the write operation. A basic format of the write operation log is txnId key1 value1, indicating that a transaction whose transaction flag is txnId writes key1 and a written value is value1. If there are a plurality of write operations in the transaction, more key-value pair modification records may be added to the write operation log. For example, txnId key1 valuel [key2 value2...] indicates that key2 is further written, and a written value is value2.

Step S3: After receiving the write response from the coordinator node, if the client finds that the write response is the retry abort information, the client aborts the transaction, and retries after waiting for a period of time; otherwise, the client continues to send a next request to the participant node.

Step S4: After receiving the write request from the client, the participant node also needs to perform conflict determining in the memory, and responds to the client with different responses based on whether the conflict exists. If no conflict is found, after the write operation log of the write request is persisted, the write response that indicates that persisting is finalized is sent to the client, so that the client can continue the operation.

Step S5: After receiving the write response from the participant node, if the client finds that the write response indicates to continue the operation, the client sends a commit request to the coordinator node, to request to commit the transaction.

Step S6: After receiving the commit request, the coordinator node persists the transaction state to committed (committed), and notifies the client that the transaction commit operation is finalized. In addition, the coordinator node determines participant nodes of the transaction in the background based on information in the request committed by the client, and sends a finalization (finalization) request to all the participant nodes. Committed indicates that the transaction has been committed. When receiving the commit request from the client, the coordinator node needs to record that the transaction is in a committed state, to indicate that an operation on data in the transaction is finalized.

Step S7: After receiving the finalization request sent by the coordinator node, the participant node modifies, to commit (commit), a state of write data for which the participant node is responsible, and sends a finalization response to the coordinator node. Commit is a special state, and is not a transaction state presented to all nodes that process the transaction, but a write operation state that is presented to the participant node and that is of the transaction. Therefore, the write operation state may also be considered as a transaction state, but not a transaction state presented to all the nodes that process the transaction. Commit recorded in each participant node is used to record data modified by the participant node, that is, data modified by the client via the participant node. The data recorded through commit is also referred to as a commit log. For example, the commit log recorded by the participant node is txnId commit key1 value 1, and indicating that the participant node modifies a key and a value of data of the transaction txnId to key1 and value1.

Step S8: After receiving finalization responses of all the participant nodes, the coordinator node persists the transaction state to finalized (finalized). Finalized indicates that the transaction has been successfully committed and an operation like as lock release has been finalized, that is, indicates that the entire transaction has been finalized.

It should be noted that, in contrast to the committed state, the transaction state further includes an aborted state, and the aborted state indicates a state in which the transaction is aborted. In other words, when the transaction is aborted due to the conflict, the transaction state is recorded as aborted.

In the transaction processing process, a plurality of database nodes need to participate and collaborate in processing. It is easy to find that in the transaction processing process, after receiving the write request from the client, both the coordinator node and the participant node need to first perform corresponding persistence operations, and then return corresponding write responses to the client. The persistence operation is on a key path in the transaction processing process, leading to an excessively long end-to-end latency of a single transaction, that is, a persistence latency.

To learn more about the persistence latency, the following divides processing time of the write operation request in the transaction. The processing time of the write operation request is divided into three parts: a network round-trip time latency T1 from the client to the database node, an internal processing latency T2 obtained after the database node receives the write operation request, and a persistence latency T3 of the write operation log. T1 is a latency caused by network communication, which is about one piece of round-trip time (round-trip time, RTT). T2 is mainly used for memory operations on the database nodes, for example, conflict detection and locking, and the latency is low and can be ignored. T3 includes a latency of communication from the database node to the storage node, which is about one piece of RTT. In addition, after receiving a persistence request, the storage node further needs to write data into a persistence device like an HDD, an SSD, or an NVM. A latency also exists in this process. The persistence latency actually refers to a problem that a latency of each write operation is approximately T1+T2+T3, leading to an excessively long latency of the write operation and an excessively long latency of a write-only transaction.

Therefore, embodiments of this application provide a database system and a data management method therefor. The following uses an example to describe system composition of the database system provided in embodiments of this application. It should be noted that an architecture of the database system is mainly described herein, and a working principle of the database system is described in the following description of the data management method for the database system.

For a diagram of the database system according to embodiments of this application, refer to FIG. 1. As shown in FIG. 1, the database system includes a client, a plurality of database nodes, and storage resources. The database system may be of a storage-compute coupled architecture. Alternatively, the database system is of a storage-compute decoupled architecture.

The plurality of database nodes include a first database node. In the database system, the client is configured to send a first write request of a target transaction to the first database node, where the first write request indicates to-be-written first data. The first database node is configured to send a first write response to the client based on the first write request, where the first write response carries a first write operation log of the first data. For example, after receiving the first write request, the first database node first performs operations such as conflict detection and locking in a memory, and immediately sends the first write response to the client. The client is further configured to persist the first write operation log based on the storage resource. In an implementation, the first write request carries the first data and a key of the first data. The first data is data for which the first database node is responsible. The first write operation log carries related information indicating a persistence manner of the first data. For example, the first write operation log carries information like a key indicating persistence of the first data.

In the database system, the client persists the first write operation log, so that the first database node can send the write response to the client without persisting the first write operation log. In this way, the client can send a next write request as soon as possible, and a latency of processing the transaction by the client is reduced, to address an excessively long latency of processing the transaction by the client, and reduce persistence load of the database node.

In the database system, the plurality of database nodes further include a second database node. In this case, the client is further configured to send a second write request of the target transaction to the second database node, where the second write request indicates to-be-written second data. The second database node is configured to send a second write response to the client based on the second write request, where the second write response carries a second write operation log of the second data. For example, after receiving the second write request, the second database node first performs operations such as conflict detection and locking in the memory, and immediately sends the second write response to the client. The client is further configured to persist the second write operation log based on the storage resource. In an implementation, the second write request carries the second data and a key of the second data. The second data is data for which the second database node is responsible. The second write operation log carries related information indicating a persistence manner of the second data. For example, the second write operation log carries information like a key indicating persistence of the second data.

Optionally, a process of persisting the first write operation log and the second write operation log by the client may be implemented based on one persistence request. That is, the client may send the persistence request to the storage resource, to persist the first write operation log and the second write operation log. The persistence request is used to request to persist the write operation logs in the storage resource. In this case, the client is specifically configured to persist the first write operation log and the second write operation log in a batch based on the storage resource. Similarly, the client may persist all the write operation logs in a batch in a single transaction. In this way, a quantity of persistence requests sent by the client to the storage resource can be reduced, and a total quantity of requests that need to be sent by the database system to process the single transaction can be reduced, thereby providing a high maximum throughput rate for the database system.

In an implementation, the client and the database node have exclusive storage resources. The exclusive resources of the client and the database node may be obtained through pre-declaration. In this case, the client is specifically configured to persist the write operation log in the exclusive storage resource of the client. In addition, when persisting the write operation log in the storage resource, the client may write the write operation log into the storage resource through append write. In this way, when the client persists the write operation log in the exclusive storage resource of the client, data stored in the exclusive resource is all write operation logs. When the target transaction has a plurality of write operation logs, the plurality of write operation logs are continuously stored in the storage resource. When all the write operation logs of the target transaction need to be read, the plurality of write operation logs of the target transaction can be sequentially read in the exclusive storage resource, so that time taken to read the write operation logs can be shortened, and a read speed of the write operation logs can be ensured.

In the database system provided in embodiments of this application, database nodes participating in transaction processing include a coordinator node and a participant node. For example, when the client needs to send a plurality of write requests to process the transaction, a database node that receives a first write request is the coordinator node, and a database node that receives remaining write requests is the participant node. In the database system provided in embodiments of this application, to facilitate subsequent use of the write operation logs, the coordinator node and the participant node may further persist the write operation logs.

In an implementation, the write operation logs persisted by the coordinator node and the participant node may be provided by the client. In this case, the client is further configured to provide all the write operation logs of the target transaction for the coordinator node. The coordinator node is configured to: obtain, based on the write operation logs, a third write operation log for which the coordinator node is responsible, and persist the third write operation log based on the storage resource; and obtain, based on the write operation logs, a fourth write operation log for which each participant node is responsible, and send, to each participant node, the fourth write operation log for which each participant node is responsible. The participant node is configured to persist, based on the storage resource, the fourth write operation log for which the participant node is responsible. In this way, both the coordinator node and the participant node can persist the write operation logs for which the coordinator node and the participant node are responsible. When the write operation logs need to be used, for example, when the transaction needs to be recovered based on the write operation logs, both the coordinator node and the participant node can obtain, from the respective storage resources, the write operation logs persisted by the coordinator node and the participant node, and perform related processing based on the obtained write operation logs, without obtaining the write operation log persisted by the client or repeatedly reading the storage resource of the client and the storage resources of the coordinator node and the participant node. This helps improve an execution speed of an operation performed based on the write operation log.

Optionally, an occasion at which the client provides all the write operation logs of the target transaction for the coordinator node may be adjusted based on an application requirement. For example, after persisting all the write operation logs of the target transaction, the client may provide all the write operation logs of the target transaction for the coordinator node. For another example, when sending a commit request to the coordinator node, the client may provide all the write operation logs of the target transaction for the coordinator node. The commit request is used to request to commit the target transaction. In an implementation, all the write operation logs of the target transaction may be carried in the commit request.

To ensure that the coordinator node can obtain the write operation logs of the target transaction, the client is further configured to provide storage addresses of the write operation logs for the coordinator node. The storage address is an address obtained by the client by persisting the write operation log. In an implementation, the storage address may include a start address and an offset (offset) of the write operation log in the storage resource. For example, when a persistent log (persistent log, plog) in a storage medium is used to store the write operation log, the storage address may include a plog identity (plogId) and the offset. In this way, when the write operation log sent by the client to the coordinator node cannot be obtained, for example, the write operation log sent by the client to the coordinator node cannot be obtained because the coordinator node is restarted due to breakdown, the coordinator node may obtain the write operation log persisted by the client based on the storage address.

When the coordinator node has the exclusive storage resource, the coordinator node is specifically configured to persist the third write operation log in the exclusive storage resource of the coordinator node; and/or when the participant node has the exclusive storage resource, the participant node is specifically configured to persist the fourth write operation log in the exclusive storage resource of the participant node. In addition, the coordinator node and/or the participant node may write the write operation logs/write operation log into the storage resources/storage resource through append write. In this way, when the database node persists the write operation log in the exclusive storage resource of the database node, data stored in the exclusive storage resource is related information of a transaction (for example, a transaction state) and the write operation log, and the related information of the transaction and the write operation log are continuously stored in the storage resource in a time sequence. When the related information of the target transaction and the write operation log need to be obtained, the related information of the target transaction and the write operation log can be sequentially read from the exclusive storage resource, to ensure the read speed. For example, when the target transaction needs to be recovered, a state of the target transaction usually needs to be queried first, and whether the transaction needs to be recovered based on the write operation log persisted by the database node is determined based on the state. When the transaction needs to be recovered based on the write operation log persisted by the database node, the write operation log persisted by the database node can be sequentially read after a storage address of the state of the target transaction. This can shorten time taken to read the state and the write operation log, and help ensure a transaction recovery speed.

In the database system provided in embodiments of this application, when states of a to-be-recovered target transaction are different, operations that need to be performed to recover the target transaction are different. Any one of a plurality of data nodes is further configured to: when the target transaction needs to be recovered, obtain a current state of the target transaction, and execute a process of recovering the target transaction based on the current state. It can be learned from the foregoing description that the coordinator node needs to maintain meta information of the transaction. For example, the coordinator node needs to record the transaction state, and the participant node does not need to maintain or present the transaction state to all nodes that process the transaction, but needs to record a write operation state of the transaction. Therefore, when the coordinator node recovers the transaction, a transaction state that needs to be referred to is the transaction state recorded by the coordinator node. When the participant node recovers the transaction, a transaction state that needs to be referred to is the write operation state recorded by the participant node. Recovery mechanisms of the coordinator node and the participant node are different, and are described below separately.

An implementation process of data recovery performed by the coordinator node includes the following several recovery cases:
In a first recovery case, when the current state indicates that the target transaction is in an in progress state, after receiving the write request from the client, the coordinator node sends, to the client, a write response that indicates to re-execute the target transaction, so that the client performs a retry abort operation on the transaction based on the write response. When the target transaction is in the in progress state, it indicates that the client has not persisted a write operation log of the target transaction before the recovery starts, and therefore needs to perform the abort retry operation on the target transaction, to recover the target transaction.
In a second recovery case, when the current state indicates that the target transaction is in a committed state, the coordinator node obtains the write operation log persisted by the client, and performs a replay operation based on the write operation log persisted by the client. When the target transaction is in the committed state, it indicates that the target transaction has been successfully committed, but the coordinator node may have not persisted the write operation log for which the coordinator node is responsible. In this case, the coordinator node may obtain the write operation log persisted by the client, and perform the replay operation based on the write operation log persisted by the client. For example, the coordinator node may obtain, from the storage address that is provided by the client for the coordinator node and that is of the write operation log, the write operation log persisted by the client.

In addition, in the second case, because the participant node may have not persisted the write operation log for which the participant node is responsible, the coordinator node is further configured to: obtain, based on the write operation log persisted by the client, the fourth write operation log for which the participant node is responsible, and send the fourth write operation log to the participant node. In this case, the participant node is further configured to persist the fourth write operation log based on the storage resource.

In a third recovery case, when the current state indicates that the target transaction is in a finalized state, the coordinator node obtains the third write operation log, and performs a replay operation based on the third write operation log. When the target transaction is in the finalized state, it indicates that the target transaction is successfully committed and cleared, and the coordinator node has persisted the write operation log for which the coordinator node is responsible. In this case, the coordinator node may obtain a write operation log persisted by the coordinator node, and perform the replay operation based on the third write operation log.

An implementation process of data recovery performed by the participant node includes the following several recovery cases:
In a first recovery case, when the current state indicates that the participant node has persisted a write operation log of the target transaction, the participant node may perform a replay operation based on the fourth write operation log. For example, when the participant node finds a commit log in logs of the participant node, it indicates that the participant node has persisted the write operation log for which the participant node is responsible, and the participant node may replay the commit log, to recover the transaction.
In a second recovery case, when the current state indicates that the participant node does not persist the write operation log of the target transaction, if receiving, within specified duration, the fourth write operation log for which the participant node is responsible, the participant node performs the replay operation based on the fourth write operation log. For example, when the participant node does not find the commit log in the logs of the participant node, it indicates that the participant node has not persisted the write operation log for which the participant node is responsible. In this case, the participant node may first wait for a period of time. If a finalization request sent by the coordinator node is received within the specified duration, or a finalization request of the target transaction sent by the coordinator node is received after the participant node queries the coordinator node, it indicates that the coordinator node can normally send the finalization request to the participant node. However, when the recovery starts, the participant node has not received the finalization request sent by the coordinator node. After receiving the finalization request, the participant node may directly perform the replay operation based on the write operation log included in the finalization request, to recover the transaction. A timestamp of the finalization request of the target transaction is smaller than a timestamp of the participant node starting to recover the transaction.
In a third recovery case, when the current state indicates that the participant node does not persist the write operation log of the target transaction, and the fourth write operation log for which the participant node is responsible is not received within the specified duration, after receiving the write request of the client, the participant node sends, to the client, a write response that indicates to re-execute the target transaction. For example, when the participant node does not find the commit log in the logs of the participant node, and after the participant node queries the coordinator node, if it is determined that no finalization request that is not sent by the coordinator node and that is of the target transaction exists, it indicates that a fault occurs in transaction execution before the coordinator node prepares to send the finalization request. In this case, after receiving the write request of the client, the participant node may send, to the client, the write response that indicates to re-execute the target transaction, to recover the transaction.

After the coordinator node and the participant node persist the write operation logs for which the coordinator node and the participant node are responsible, two copies of the write operation logs of the transaction are actually stored. The client persists a first copy, and the coordinator node and the participant node persist the second copy. This facilitates use of the write operation log, but causes redundant storage. To reduce storage space overheads, the database system provided in embodiments of this application further has a storage space reclaiming mechanism. In an implementation, the coordinator node is further configured to: when the target transaction is finalized, send a reclaiming request for storage space to the client, where the reclaiming request carries indication information of the storage space. The client is further configured to reclaim the storage space based on the reclaiming request. Optionally, the indication information of the storage space may be an address of the storage space. For example, the indication information may be a plogId and an offset. Alternatively, the indication information may directly indicate to-be-reclaimed data, and the client may obtain the to-be-reclaimed storage space based on the indication information and the storage address that is persisted by the client and that is of the data.

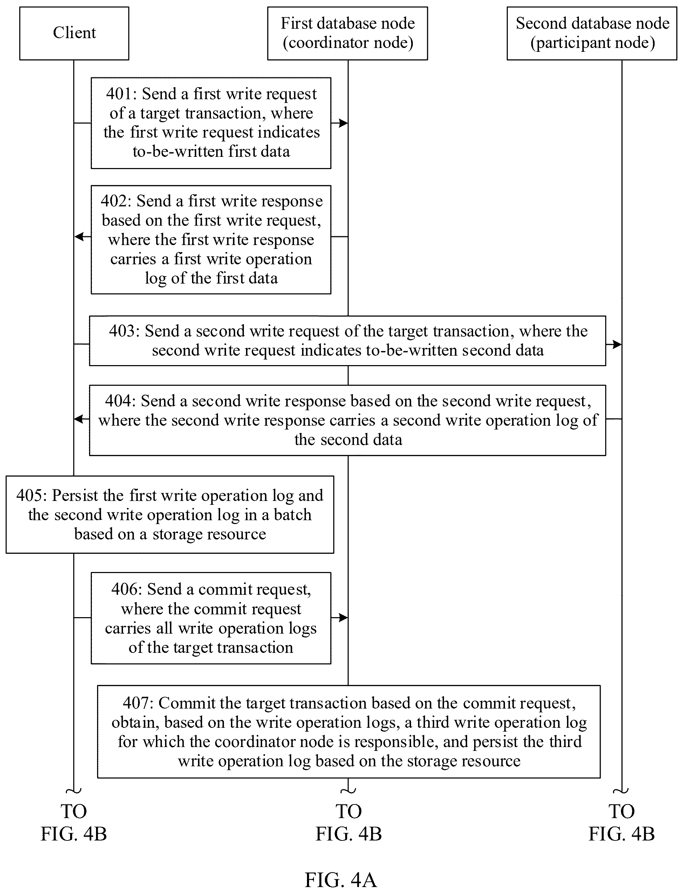

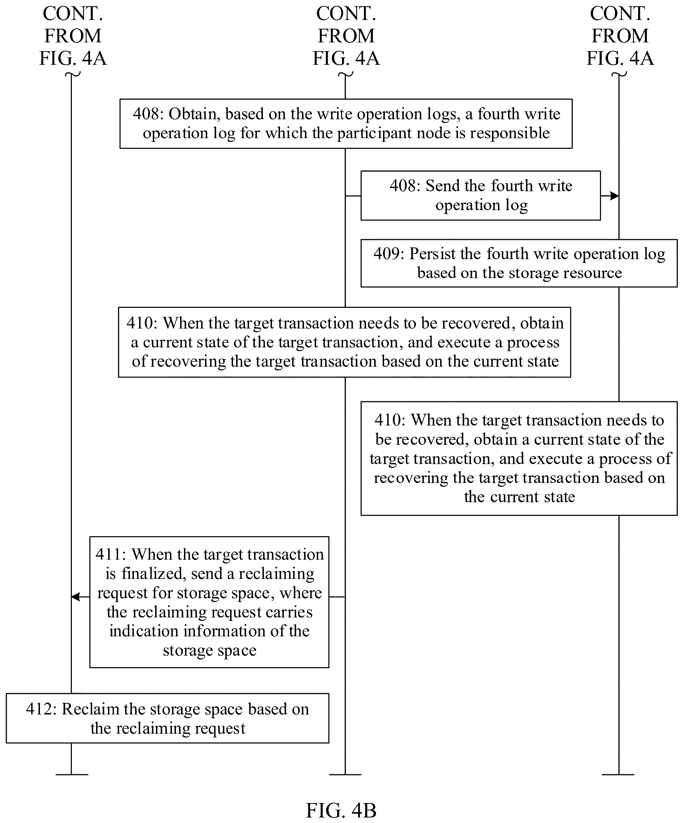

The following describes the data management method for the database system provided in embodiments of this application. The method is applied to the database system provided in embodiments of this application. As shown in FIG. 4A and FIG. 4B, the data management method for the database system includes the following steps.

Step 401: A client sends a first write request of a target transaction to a first database node, where the first write request indicates to-be-written first data.

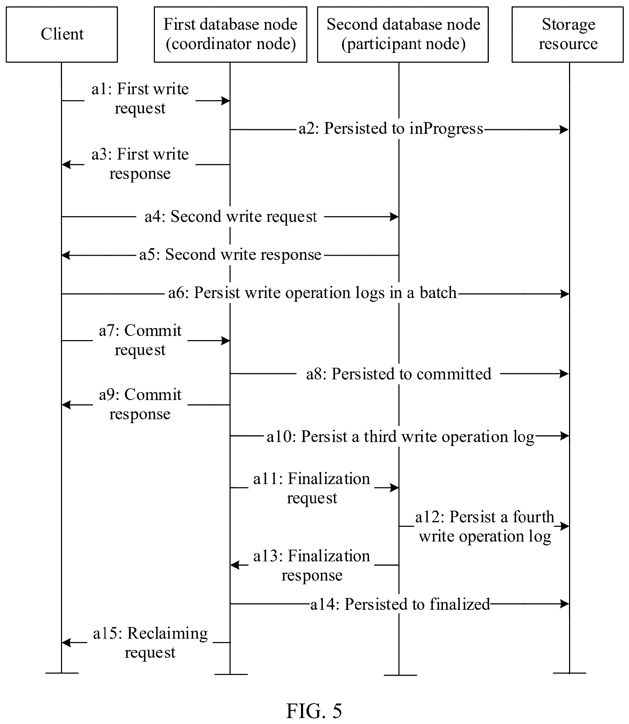

When the client needs to perform a write operation, as shown in a1 in FIG. 5, the client may send the first write request to the database node in the database system. In an implementation, the first write request carries the first data and a key of the first data. The first data is data for which the first database node is responsible. For example, it is assumed that the client needs to execute a target transaction txnId: write a = 10 and write b = 20, where a and b are respectively mapped to different database nodes. The client needs to send a request a to one database node, where the request a indicates writing of a = 10, and send a request b to another database node, where the request b indicates writing of b = 20. The first write request may be the request a.

Step 402: The first database node sends a first write response to the client based on the first write request, where the first write response carries a first write operation log of the first data.

After receiving the first write request, the first database node may first perform operations such as conflict detection and locking in a memory, to determine whether there is an available resource for executing the target transaction. After determining that there is the available resource for executing the target transaction, as shown in a3 in FIG. 5, the first database node may immediately send the first write response to the client. In this way, the first database node does not need to send the first write response to the client until the first data is persisted, so that the client can send a next write request as soon as possible, thereby reducing a latency in processing the transaction by the client. The first write operation log carries related information indicating a persistence manner of the first data. For example, the first write operation log carries information like a key indicating persistence of the first data.

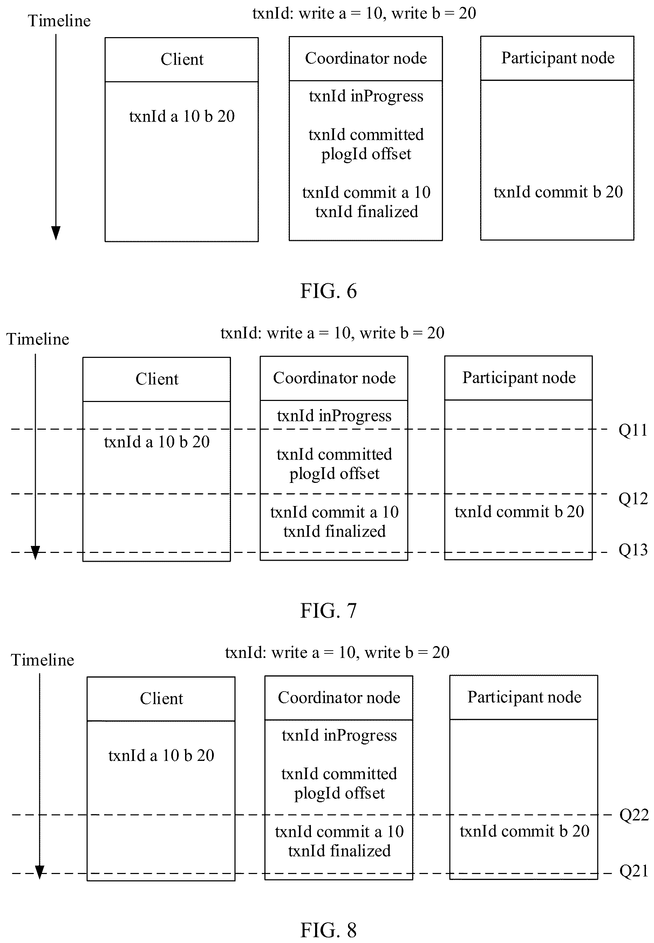

When the first database node is a first database node in the database system that receives the write request belonging to the target transaction, the first database node becomes a coordinator node of the target transaction, and a data node that receives a subsequent write request belonging to the target transaction is a participant node of the target transaction. After receiving the write request, as shown in a2 in FIG. 5, after determining that there is the available resource for executing the target transaction, the coordinator node further needs to persist a state of the target transaction to in progress (inProgress), and the participant node does not need to persist the state of the target transaction. In addition, the write response may be sent after the coordinator node completes persistence of the state of the target transaction. For example, step 401 is still used as an example. FIG. 6 is a diagram of data persisted by the client, the first database node, and a second database node in a transaction execution process according to an embodiment of this application. As shown in FIG. 6, in an entire execution timeline (timeline) of the target transaction, data persisted first is the transaction state txnId inProgress persisted in the first database node.

Step 403: The client sends a second write request of the target transaction to the second database node, where the second write request indicates to-be-written second data.

When the write operation of the client needs to be implemented based on a plurality of write requests, after receiving the first write response, as shown in a4 in FIG. 5, the client can send the second write request of the target transaction to the second database node. In an implementation, the second write request carries the second data and a key of the second data. The second data is data for which the second database node is responsible. The example in step 401 is still used as an example, and the second write request may be the request b.

Step 404: The second database node sends a second write response to the client based on the second write request, where the second write response carries a second write operation log of the second data.

After receiving the second write request, the second database node may first perform the operations such as conflict detection and locking in the memory, to determine whether there is an available resource for executing the transaction. After determining that there is the available resource for executing the transaction, as shown in a5 in FIG. 5, the second database node immediately sends the second write response to the client. In this way, the second database node does not need to send the second write response to the client until the second data is persisted, so that the client can send a next write request as soon as possible, thereby reducing the latency in processing the transaction by the client. The second write operation log carries related information indicating a persistence manner of the second data. For example, the second write operation log carries information like a key indicating persistence of the second data.

Step 405: The client persists the first write operation log and the second write operation log in a batch based on a storage resource.

After receiving the write responses sent by the database node, the client may persist the write operation logs carried in the write responses. In an implementation, after receiving a plurality of write operation logs, the client may persist the plurality of write operation logs in a batch. For example, as shown in a6 in FIG. 5, after receiving all write responses of the target transaction, the client may persist, in a batch, write operation logs carried in all the write responses. That is, the client may send one persistence request to the storage resource, to persist all the write operation logs of the target transaction. The persistence request is used to request to persist the write operation logs in the storage resource. In this way, a quantity of persistence requests sent by the client to the storage resource can be reduced, and a total quantity of requests that need to be sent by the database system to process a single transaction can be reduced, thereby providing a high maximum throughput rate for the database system. For example, step 401 is still used as an example. As shown in FIG. 6, in the entire execution timeline of the target transaction, after the transaction state txnId inProgress is persisted, data subsequently persisted is a write operation log txnId a = 10 b = 20 of the target transaction persisted in the client.

It should be noted that, when the client persists all the write operation logs of the target transaction in a batch, each time the client receives a write operation log, the client may first locally cache the write operation log, and after receiving all the write operation logs of the target transaction, persists all the write operation logs in a batch. In addition, if the transaction needs to be rolled back, the client does not need to persist the write operation log, so that persistence request overheads can be reduced.

When the client has an exclusive storage resource, the client is specifically configured to persist the write operation log in the exclusive storage resource of the client. Exclusive resources of the client may be obtained through pre-declaration. In addition, when persisting the write operation log in the storage resource, the client may write the write operation log into the storage resource through append write. In this way, when the client persists the write operation log in the exclusive storage resource of the client, data stored in the exclusive resource is all write operation logs. When the target transaction has a plurality of write operation logs, the plurality of write operation logs are continuously stored in the storage resource. When all the write operation logs of the target transaction need to be read, the plurality of write operation logs of the target transaction can be sequentially read in the exclusive storage resource, so that time taken to read the write operation logs can be shortened, and a read speed of the write operation logs can be ensured.

Step 406: The client sends a commit request to the coordinator node, where the commit request carries all the write operation logs of the target transaction.

As shown in a7 in FIG. 5, after the client persists all the write operation logs of the target transaction, the client may send the commit request to the coordinator node, to request to commit the target transaction. In the database system provided in embodiments of this application, to facilitate subsequent use of the write operation logs, the coordinator node and the participant node may further persist the write operation logs. In an implementation, the write operation logs persisted by the coordinator node and the participant node may be provided by the client. In this case, the client may further provide all the write operation logs of the target transaction for the coordinator node. Optionally, an occasion at which the client provides all the write operation logs of the target transaction for the coordinator node may be adjusted based on an application requirement. For example, after persisting all the write operation logs of the target transaction, the client may provide all the write operation logs of the target transaction for the coordinator node. For another example, when sending the commit request to the coordinator node, the client may provide all the write operation logs of the target transaction for the coordinator node. For example, all the write operation logs of the target transaction may be carried in the commit request.

To ensure that the coordinator node can obtain the write operation logs of the target transaction, the client is further configured to provide storage addresses of the write operation logs for the coordinator node. The storage address is an address obtained by the client by persisting the write operation log. In an implementation, the storage address may include a start address and an offset (offset) of the write operation log in the storage resource. For example, when a plog is used to store the write operation log, the storage address may include a plogId and the offset. In this way, when the write operation log sent by the client to the coordinator node cannot be obtained, for example, the write operation log sent by the client to the coordinator node cannot be obtained because the coordinator node is restarted due to breakdown, the coordinator node may obtain the write operation log persisted by the client based on the storage address.

Step 407: The coordinator node commits the target transaction based on the commit request, obtains, based on the write operation logs, a third write operation log for which the coordinator node is responsible, and persists the third write operation log based on the storage resource.

After receiving the commit request, as shown in a8 in FIG. 5, after determining that there is the available resource for executing the target transaction, the coordinator node may persist the state of the target transaction to committed, to commit the target transaction. As shown in a9 in FIG. 5, the coordinator node sends a commit response to the client, so that the client sends a request for a next transaction. For example, step 401 is still used as an example. As shown in FIG. 6, in the entire execution timeline of the target transaction, after the write operation log txnId a 10 b 20 of the target transaction is persisted, data subsequently persisted is a transaction state txnId committed persisted in the first database node.

Optionally, after receiving all the write operation logs of the target transaction, as shown in a10 in FIG. 5, the coordinator node may obtain the third write operation log for which the coordinator node is responsible from the write operation logs, and persist the third write operation log based on the storage resource, to facilitate subsequent use of the third write operation log. In an implementation, the coordinator node may obtain, based on information carried in the write response sent by the coordinator node to the client, for example, based on a key carried in the write response sent by the coordinator node to the client, the third write operation log for which the coordinator node is responsible from all the write operation logs of the target transaction. Optionally, the third write operation log is persisted after the commit response is sent. In this way, after receiving the commit response, the client may immediately process a next transaction. In addition, when the client further provides the storage addresses of all the write operation logs of the target transaction for the coordinator node, the coordinator node further needs to persist the storage addresses based on the storage resource. In an implementation, when the commit request carries the write operation log and the storage address of the write operation log, to ensure that the write operation log can be obtained, the coordinator node may first persist the storage address after receiving the commit request, and persist the third write operation log after obtaining the third write operation log. In addition, the coordinator node may send the commit response to the client after persisting the transaction state txnId committed and the storage address. For example, step 401 is still used as an example. As shown in FIG. 6, in the entire execution timeline of the target transaction, after the write operation log txnId a 10 b 20 of the target transaction is persisted, the transaction state txnId committed, and plogIds and offsets in the storage addresses of all the write operation logs of the target transaction are subsequently persisted, and the third write operation log txnId commit a 10 is persisted in the first database node. Alternatively, the storage addresses may be persisted in a batch with the third write operation log, so that the quantity of persistence requests sent to the storage resource can be reduced.

When the coordinator node has an exclusive storage resource, the coordinator node is specifically configured to persist the third write operation log in the exclusive storage resource of the coordinator node. The exclusive resource of the coordinator node may be obtained through pre-declaration. In addition, when persisting the write operation log in the storage resource, the coordinator node may write the write operation log into the storage resource through append write. In this way, when the coordinator node persists the write operation log in the exclusive storage resource of the coordinator node, data stored in the exclusive storage resource is related information of a transaction (for example, a transaction state) and the write operation log, and the related information of the transaction and the write operation log are continuously stored in the storage resource in a time sequence. When the coordinator node needs to obtain the related information of the target transaction and the write operation log, the coordinator node can sequentially read the related information of the target transaction and the write operation log from the exclusive storage resource of the coordinator node, to ensure the read speed. For example, when the target transaction needs to be recovered, the coordinator node usually needs to query the state of the target transaction first, and determines, based on the state, whether the transaction needs to be recovered based on the third write operation log. When the transaction needs to be recovered based on the third write operation log, the third write operation log can be sequentially read after a storage address of the state of the target transaction. This can shorten time taken to read the state and the write operation log, and help ensure a transaction recovery speed.

The coordinator node persists the write operation log for which the coordinator node is responsible. When the coordinator node needs to use the write operation log, for example, when the transaction needs to be recovered based on the write operation log, the coordinator node can obtain, from the storage resource of the coordinator node, the write operation log persisted by the coordinator node, and perform related processing based on the obtained write operation log, without obtaining the write operation log persisted by the client or repeatedly reading the storage resource of the client and the storage resource of the coordinator node. This helps improve an execution speed of an operation performed based on the write operation log.

Step 408: The coordinator node obtains, based on the write operation logs, a fourth write operation log for which the participant node is responsible, and sends the fourth write operation log to the participant node.

The commit request further carries indication information of the participant node. The coordinator node may determine the participant node of the target transaction based on the indication information, obtain, from all the write operation logs of the target transaction, the fourth write operation log for which the participant node is responsible, and send the fourth write operation log to the participant node. In an implementation, the indication information may include an address of the participant node and a range of a key of the write operation log for which the participant node is responsible. The coordinator node may determine the participant node of the target transaction based on the address of the participant node, and may obtain, from all the write operation logs of the target transaction based on the range of the key of the write operation log for which the participant node is responsible, the fourth write operation log for which the participant node is responsible.

After the coordinator node commits the transaction, as shown in a11 in FIG. 5, the coordinator node sends a finalization request to the participant node, to indicate the participant node to modify, to committed, a state of write data for which the participant node is responsible. In an implementation, the finalization request sent by the coordinator node to the participant node may carry the fourth write operation log sent to the participant node. Optionally, a process in which the coordinator node sends the finalization request to the participant node and a process in which the coordinator node sends the commit response may be performed asynchronously.

Step 409: The participant node persists the fourth write operation log based on the storage resource.

When the participant node has an exclusive storage resource, as shown in a12 in FIG. 5, the participant node is specifically configured to persist the fourth write operation log in the exclusive storage resource of the participant node, to facilitate subsequent use of the fourth write operation log. The exclusive resource of the participant node may be obtained through pre-declaration. In addition, when persisting the write operation log in the storage resource, the participant node may write the write operation log into the storage resource through append write. In addition, it can be learned from the foregoing description that the process in which the coordinator node sends the finalization request to the participant node and the process in which the coordinator node sends the commit response may be performed asynchronously. Correspondingly, a process in which the coordinator node persists the third write operation log and a process in which the participant persists the fourth write operation log may be performed asynchronously. For example, step 401 is still used as an example. As shown in FIG. 6, in the entire execution timeline of the target transaction, after the third write operation log txnId commit a 10 is persisted, data subsequently persisted is the fourth write operation log txnId commit b 20 persisted in the second database node.

In this way, when the participant node persists the write operation log in the exclusive storage resource of the participant node, data stored in the exclusive storage resource is a commit log and the write operation log, and the commit log and the write operation log are continuously stored in the storage resource in a time sequence. When the participant node needs to obtain the commit log and the write operation log, the participant node can sequentially read the commit log and the write operation log from the exclusive storage resource of the participant node, to ensure the read speed. For example, when the participant node needs to recover the target transaction, the participant node usually needs to query the commit log of the target transaction first, and determines, based on a state indicated by the commit log, whether the transaction needs to be recovered based on the fourth write operation log. When the transaction needs to be recovered based on the fourth write operation log, the fourth write operation log can be sequentially read after the storage address of the state of the target transaction. This can shorten the time taken to read the state and the write operation log, and help ensure the transaction recovery speed.

The participant node persists the write operation log for which the participant node is responsible. When the participant node needs to use the write operation log, for example, when the transaction needs to be recovered based on the write operation log, the participant node can obtain, from the storage resource of the participant node, the write operation log persisted by the participant node, and perform related processing based on the obtained write operation log, without obtaining the write operation log persisted by the client or repeatedly reading the storage resource of the client and the storage resource of the participant node. This helps improve the execution speed of the operation performed based on the write operation log.

After the participant node modifies, to committed, a state of write data for which the participant node is responsible, as shown in a13 in FIG. 5, the participant node may send a finalization response to the coordinator node. After receiving finalization responses of all participant nodes, as shown in a14 in FIG. 5, after determining that there is the available resource for executing the target transaction, the coordinator node may persist the state of the target transaction to finalized, to indicate that the transaction has been normally committed and response cleanup is finalized. For example, step 401 is still used as an example. As shown in FIG. 6, in the entire execution timeline of the target transaction, after the fourth write operation log txnId commit b 20 is persisted, data subsequently persisted is a transaction state txnId finalized persisted in the first database node.

Step 410: When the target transaction needs to be recovered, any one of a plurality of data nodes obtains a current state of the target transaction, and executes a process of recovering the target transaction based on the current state.

When states of a to-be-recovered target transaction are different, operations that need to be performed to recover the target transaction are different. The any one of the plurality of data nodes is further configured to: when the target transaction needs to be recovered, obtain the current state of the target transaction, and execute the process of recovering the target transaction based on the current state. It can be learned from the foregoing description that the coordinator node needs to maintain meta information of the transaction. For example, the coordinator node needs to record the transaction state, and the participant node does not need to maintain or present the transaction state to all nodes that process the transaction, but needs to record a write operation state of the transaction. Therefore, when the coordinator node recovers the transaction, a transaction state that needs to be referred to is the transaction state recorded by the coordinator node. When the participant node recovers the transaction, a transaction state that needs to be referred to is the write operation state recorded by the participant node. Recovery mechanisms of the coordinator node and the participant node are different, and are described below separately.

An implementation process of data recovery performed by the coordinator node includes the following several recovery cases:

In a first recovery case, when the current state indicates that the target transaction is in an in progress state, after receiving the write request from the client, the coordinator node sends, to the client, a write response that indicates to re-execute the target transaction, so that the client performs a retry abort operation on the transaction based on the write response. When the target transaction is in the in progress state, as shown in FIG. 7, execution progress of the target transaction may reach only Q11. The client has not persisted a write operation log of the target transaction before the recovery starts, and therefore needs to perform the abort retry operation on the target transaction, to recover the target transaction.

In a second recovery case, when the current state indicates that the target transaction is in a committed state, the coordinator node obtains the write operation log persisted by the client, and performs a replay operation based on the write operation log persisted by the client. When the target transaction is in the committed state, as shown in FIG. 7, the execution progress of the target transaction may reach only Q12. The target transaction has been successfully committed, but the coordinator node may have not persisted the write operation log for which the coordinator node is responsible. In this case, the coordinator node may obtain the write operation log persisted by the client, and perform the replay operation based on the write operation log persisted by the client. For example, the coordinator node may obtain, from the storage address that is provided by the client for the coordinator node and that is of the write operation log, the write operation log persisted by the client.

In addition, in the second case, because the participant node may have not persisted the write operation log for which the participant node is responsible, the coordinator node is further configured to: obtain, based on the write operation log persisted by the client, the fourth write operation log for which the participant node is responsible, and send the fourth write operation log to the participant node. In this case, the participant node is further configured to persist the fourth write operation log based on the storage resource.

In a third recovery case, when the current state indicates that the target transaction is in a finalized state, the coordinator node obtains the third write operation log, and performs a replay operation based on the third write operation log. When the target transaction is in the finalized state, as shown in FIG. 7, the execution progress of the target transaction may reach only Q13. The target transaction is successfully committed and cleared, and the coordinator node has persisted the write operation log for which the coordinator node is responsible. In this case, the coordinator node may obtain the write operation log persisted by the coordinator node, and perform the replay operation based on the third write operation log.

An implementation process of data recovery performed by the participant node includes the following several recovery cases:
In a first recovery case, when the current state indicates that the participant node has persisted a write operation log of the target transaction, the participant node may perform a replay operation based on the fourth write operation log. For example, when the participant node finds the commit log in logs of the participant node, as shown in FIG. 8, the execution progress of the target transaction may reach only Q21. The participant node has persisted the write operation log for which the participant node is responsible, and the participant node may replay the commit log, to recover the transaction.
In a second recovery case, when the current state indicates that the participant node does not persist the write operation log of the target transaction, if receiving, within specified duration, the fourth write operation log for which the participant node is responsible, the participant node performs the replay operation based on the fourth write operation log. For example, when the participant node does not find the commit log in the logs of the participant node, as shown in FIG. 8, the execution progress of the target transaction may reach only Q22. The participant node has not persisted the write operation log for which the participant node is responsible. In this case, the participant node may first wait for a period of time. If the finalization request sent by the coordinator node is received within the specified duration, or the finalization request of the target transaction sent by the coordinator node is received after the participant node queries the coordinator node, it indicates that the coordinator node can normally send the finalization request to the participant node. However, when the recovery starts, the participant node has not received the finalization request sent by the coordinator node. After receiving the finalization request, the participant node may directly perform the replay operation based on the write operation log included in the finalization request, to recover the transaction. A timestamp of the finalization request of the target transaction is smaller than a timestamp of the participant node starting to recover the transaction.
In a third recovery case, when the current state indicates that the participant node does not persist the write operation log of the target transaction, and the fourth write operation log for which the participant node is responsible is not received within the specified duration, after receiving the write request of the client, the participant node sends, to the client, a write response that indicates to re-execute the target transaction. For example, when the participant node does not find the commit log in the logs of the participant node, as shown in FIG. 8, the execution progress of the target transaction may reach only Q22. After the participant node queries the coordinator node, if it is determined that no finalization request that is not sent by the coordinator node and that is of the target transaction exists, it indicates that a fault occurs in transaction execution before the coordinator node prepares to send the finalization request. In this case, after receiving the write request of the client, the participant node may send, to the client, the write response that indicates to re-execute the target transaction, to recover the transaction.

Step 411: When the target transaction is finalized, the coordinator node sends a reclaiming request for storage space to the client, where the reclaiming request carries indication information of the storage space.

After the coordinator node and the participant node persist the write operation logs for which the coordinator node and the participant node are responsible, two copies of the write operation logs of the transaction are actually stored. The client persists a first copy, and the coordinator node and the participant node persist the second copy. This facilitates use of the write operation log, but causes redundant storage. To reduce storage space overheads, the database system provided in embodiments of this application further has a storage space reclaiming mechanism. In an implementation, as shown in a15 in FIG. 5, the coordinator node is further configured to: when the target transaction is finalized, send the reclaiming request for the storage space to the client, where the reclaiming request carries the indication information of the storage space. Optionally, the indication information of the storage space may be an address of the storage space. For example, the indication information may be the plogId and the offset. Alternatively, the indication information may directly indicate to-be-reclaimed data, so that the client obtains the to-be-reclaimed storage space based on the indication information and the storage address that is persisted by the client and that is of the data.

Step 412: The client reclaims the storage space based on the reclaiming request.

After receiving the reclaiming request, the client may reclaim the storage space based on the reclaiming request. It should be noted that herein, an example in which the storage resource corresponding to the client is reclaimed is used for description, but reclaiming the storage resource corresponding to the database node is not excluded. A person of ordinary skill in the art may know that, with a change of a service requirement, an object that needs to be reclaimed may be adjusted based on an application requirement. This is not specifically limited herein. In addition, when the storage resource corresponding to the database node is reclaimed, for an implementation of reclaiming the storage resource corresponding to the database node, refer to the implementation of reclaiming the storage resource corresponding to the database node. Details are not described herein again.

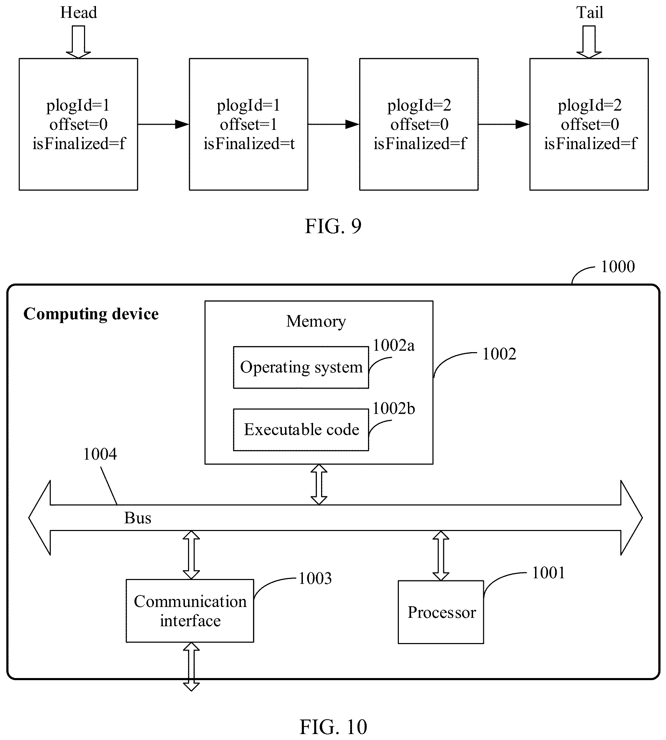

In an implementation, when the plog is used to store data of the target transaction, the data is written into the storage resource through append write, and the indication information of the reclaiming request is the plogId and the offset. The client may locally maintain a hash linked list, and manage storage resource usage based on the hash linked list. As shown in FIG. 9, the hash linked list includes a plurality of chunks (chunks). Each chunk is used to store index information of data written based on a same input/output interface (I/O interface) address. In addition, one piece of index information is generated in each data write process. Each plog can store data corresponding to the plurality of chunks. A plogId in the hash linked list indicates a plog for storing data, an offset indicates an offset of a chunk in a current plog, isFinalized indicates whether data in the chunk can be reclaimed, false (for example, f in FIG. 9) indicates that the data cannot be reclaimed, and true (for example, t in FIG. 9) indicates that the data can be reclaimed. The hash linked list has a head (head) and a tail (tail). Nodes between the head and the tail indicate all chunks that are not reclaimed in the storage resource. After receiving the reclaiming request, the client may compare the plogId and the offset in the reclaiming request with the plogId and the offset in the hash linked list, and execute a corresponding processing policy based on a comparison result. The following three cases are mainly included:
In a first case, when the plogId in the reclaiming request is different from the plogId pointed to by the head in the hash linked list, and/or the offset in the reclaiming request is different from the offset pointed to by the head in the hash linked list, isFinalized of a chunk currently pointed to by the head is modified to true.
In a second case, when the plogId in the reclaiming request is the same as the plogId pointed to by the head in the hash linked list, and the offset in the reclaiming request is the same as the offset pointed to by the head in the hash linked list, the head is moved to a next chunk whose isFinalized is false in a sequence of the hash linked list.
In a third case, when the head is moved, and it is found that a plog to which a next chunk that the head moves to belongs is different from a plog to which a current chunk belongs, it indicates that all chunks corresponding to the plog to which the current chunk belongs have been used up, and the plog may be reclaimed.

As shown in FIG. 9, when the plogId in the reclaiming request is the same as the plogId pointed to by the head in the hash linked list, and the offset in the reclaiming request is the same as the offset pointed to by the head in the hash linked list, the head is moved to a second chunk in FIG. 9 in the sequence of the hash linked list. Because isFinalized in the second chunk is true, the head needs to be moved backward for another time, that is, the head is moved to a third chunk in FIG. 9. In this case, it is found that a plogId of the third chunk in FIG. 9 is 2, and is different from the plogId to which the chunk pointed to by the head before the move belongs being 1. Therefore, in this case, the client may send, to the storage resource, the request indicating to reclaim a plog whose plogId is 1, so that the storage resource reclaims the plog.

In conclusion, in the data management method for the database system provided in embodiments of this application, the client persists the first write operation log, so that the database node can send the write response to the client without persisting the write operation log. In this way, the client can send the next write request as soon as possible, and a latency of processing the transaction by the client is reduced, to address an excessively long latency of processing the transaction by the client, and reduce persistence load of the database node. In addition, the client can persist all the write operation logs in a batch in the single transaction, so that the quantity of persistence requests sent by the client to the storage resource can be reduced, and the total quantity of requests that need to be sent by the database system to process the single transaction can be reduced, thereby providing the high maximum throughput rate for the database system. For example, this can improve extreme performance by 160%. In addition, in a transaction processing process, although the client locally caches the write operation log, the client still sends the write request to the database node, to notify the database node to perform operations such as conflict detection and locking, so that the database system can detect a conflict between transactions more quickly. This avoids unnecessary waste, and can achieve better throughput performance under same data contention workload, for example, achieve better performance under high data contention workload (high data contention workload).

It should be noted that a sequence of steps in the data management method for the database system method provided in embodiments of this application may be appropriately adjusted, and a step may be correspondingly added or deleted based on a situation. Any variation method readily figured out by a person skilled in the art within the technical scope disclosed in this application shall fall within the protection scope of this application. Therefore, details are not described herein.

The following describes a hardware structure in embodiments of this application by using an example.

An embodiment of this application provides a computing device. The computing device is configured to implement: some or all functions of the data management method provided in embodiments of this application, for example, implement a function of a database node or a storage resource of a customer. FIG. 10 is a diagram of a structure of a computing device according to an embodiment of this application. As shown in FIG. 10, the computing device 1000 includes a processor 1001, a memory 1002, a communication interface 1003, and a bus 1004. Communication connections between the processor 1001, the memory 1002, and the communication interface 1003 are implemented through the bus 1004.

The processor 1001 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor, an application-specific integrated circuit (application-specific integrated circuit, ASIC), a field-programmable gate array (field-programmable gate array, FPGA), or a network processor (network processor, NP). The processor 1001 may alternatively be an integrated circuit chip and has a signal processing capability. In an implementation process, some or all functions of the data management method in this application may be implemented by using an integrated logic circuit of hardware in the processor 1001 or instructions in a form of software.

The memory 1002 is configured to store a computer program, and the computer program includes an operating system 1002a and executable code (namely, program instructions) 1002b. For example, the memory 1002 is a read-only memory, another type of static storage device that can store static information and instructions, a random access memory, another type of dynamic storage device that can store information and instructions, an electrically erasable programmable read-only memory, a compact disc read-only memory, other optical disk storage, optical disc storage (including a compact disc, a laser disc, an optical disc, a digital versatile disc, a Blu-ray disc, or the like), a magnetic disk storage medium, another magnetic storage device, or any other medium that can be used to carry or store expected executable code in a form of instructions or a data structure and that can be accessed by a computer, but is not limited thereto. For example, the memory 1002 is configured to store an egress queue. For example, the memory 1002 exists independently, and is connected to the processor 1001 through the communication bus 1004. Alternatively, the memory 1002 may be integrated with the processor 1001. The memory 1002 may store executable code. When the executable code stored in the memory 1002 is executed by the processor 1001, the processor 1001 is configured to perform some or all functions of the data management method provided in embodiments of this application. For an implementation of performing the process by the processor 1001, accordingly refer to related descriptions in the foregoing embodiments. The memory 1002 may further include another software module, data, and the like, for example, an operating system, for running a process.

The communication interface 1003 uses a transceiver module, for example, but not limited to a transceiver, to implement communication with another device or a communication network. For example, the communication interface 1003 may be any one or any combination of the following components having a network access function: a network interface (for example, an ethernet interface) or a wireless network interface card.

The bus 1004 is any type of communication bus configured to implement interconnection between internal components (for example, the memory 1002, the processor 1001, and the communication interface 1003) in the computing device, for example, a system bus. In this embodiment of this application, an example in which the foregoing components in the computing device are interconnected through the bus 1004 is used for description. Optionally, the foregoing components in the computing device 1000 may be communicatively connected to each other in another connection manner other than through the bus 1004. For example, the foregoing components in the computing device 1000 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components. Descriptions of procedures corresponding to the foregoing accompanying drawings have respective focuses. For a part that is not described in detail in a procedure, refer to related descriptions of other procedures.

All or some of the foregoing embodiments may be implemented by using software, hardware, firmware, or any combination thereof. When the software is used to implement embodiments, all or a part of embodiments may be implemented in a form of a computer program product. The computer program product that provides a program development platform includes one or more computer instructions. When these computer program instructions are loaded and executed on the computing device, all or some of functions of the data management method provided in embodiments of this application are implemented.

The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

An embodiment of this application further provides a computing device cluster. The computing device cluster includes at least one computing device. The computing device may be a server, for example, a central server, an edge server, or a local server in a local data center. In some embodiments, some computing devices in the computing device cluster may alternatively be terminal devices like desktop computers, notebook computers, or smartphones.

Optionally, for a structure of the at least one computing device included in the computing device cluster, refer to the computing device 1000 shown in FIG. 10. A memory 1002 in one or more computing devices 1000 in the computing device cluster may store same instructions for performing a data management method.

Alternatively, in some possible implementations, the memory 1002 in the one or more computing devices 1000 in the computing device cluster may separately store some instructions for performing the data management method. In other words, a combination of the one or more computing devices 1000 may jointly execute the instructions for performing the data management method.

It should be noted that memories 1002 in different computing devices 1000 in the computing device cluster may store different instructions for separately performing some functions of a database system. In other words, instructions stored in the memories 1002 in the different computing devices 1000 can implement functions of a client, a database node, and a storage resource.

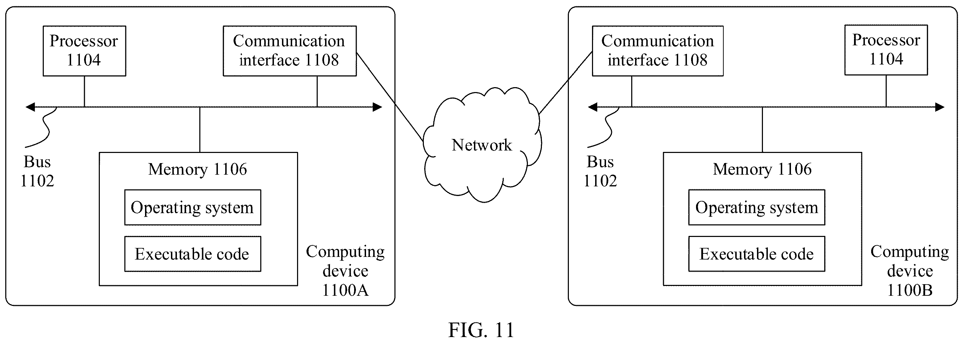

In some possible implementations, the one or more computing devices in the computing device cluster may be connected through a network. The network may be a wide area network, a local area network, or the like. FIG. 11 shows a possible implementation. As shown in FIG. 11, two computing devices 1100A and 1100B are connected through a network. Specifically, each computing device is connected to the network through a communication interface of the computing device. In this possible implementation, the computing devices 1100A and 1100B include buses 1102, processors 1104, memories 1106, and communication interfaces 1108. The memory 1106 in the computing device 1100A stores instructions for performing a function of a client. In addition, the memory 1106 in the computing device 1100B stores instructions for performing a function of a database node.

It should be understood that functions of the computing device 1100A shown in FIG. 11 may alternatively be completed by a plurality of computing devices 1100. Similarly, functions of the computing device 1100B may also be completed by a plurality of computing devices 1100. In addition, a deployment manner of the modules configured to implement the data management method in the computing device may alternatively be adjusted based on an application requirement.

An embodiment of this application further provides a computer-readable storage medium. The computer-readable storage medium is a non-volatile computer-readable storage medium. The computer-readable storage medium includes program instructions. When the program instructions are run on a computing device, the computing device is enabled to implement the data management method provided in embodiments of this application.

An embodiment of this application further provides a computer program product including instructions. When the computer program product runs on a computer, the computer is enabled to implement the data management method provided in embodiments of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

It should be noted that information (including but not limited to user equipment information and personal information of a user), data (including but not limited to data used for analysis, stored data, and presented data), and signals in this application are all used under authorization by the user or full authorization by all parties, and collection, use, and processing of related data need to conform to related laws, regulations, and standards of related countries and regions. For example, original data, executable code, and the like in this application are obtained under full authorization.

In embodiments of this application, the terms "first", "second", and "third" are merely used for description, but cannot be understood as an indication or implication of relative importance. The term "at least one" means one or more, and the term "a plurality of" means two or more, unless otherwise expressly limited.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A database system, wherein the database system comprises a client, a plurality of database nodes, and a storage resource, and the plurality of database nodes comprise a first database node;
the client is configured to send a first write request of a target transaction to the first database node, wherein the first write request indicates to-be-written first data;
the first database node is configured to send a first write response to the client based on the first write request, wherein the first write response carries a first write operation log of the first data; and
the client is further configured to persist the first write operation log based on the storage resource.

2. The database system according to claim 1, wherein the plurality of database nodes further comprise a second database node;
the client is further configured to send a second write request of the target transaction to the second database node, wherein the second write request indicates to-be-written second data;
the second database node is configured to send a second write response to the client based on the second write request, wherein the second write response carries a second write operation log of the second data; and
the client is specifically configured to persist the first write operation log and the second write operation log in a batch based on the storage resource.

3. The database system according to claim 1 or 2, wherein the plurality of database nodes comprise a coordinator node and a participant node;
the client is further configured to provide all write operation logs of the target transaction for the coordinator node;
the coordinator node is configured to: obtain, based on all the write operation logs, a third write operation log for which the coordinator node is responsible, and persist the third write operation log based on the storage resource;
the coordinator node is further configured to: obtain, based on all the write operation logs, a fourth write operation log for which the participant node is responsible, and send the fourth write operation log to the participant node; and
the participant node is configured to persist the fourth write operation log based on the storage resource.

4. The database system according to claim 3, wherein
the client is further configured to provide storage addresses of all the write operation logs for the coordinator node.

5. The database system according to claim 3 or 4, wherein
any one of the plurality of data nodes is further configured to: when the target transaction needs to be recovered, obtain a current state of the target transaction, and execute a process of recovering the target transaction based on the current state.

6. The database system according to claim 5, wherein the coordinator node is specifically configured to:
when the current state indicates that the target transaction is in an in progress state, after receiving a write request from the client, send, to the client, a write response that indicates to re-execute the target transaction;
when the current state indicates that the target transaction is in a committed state, obtain a write operation log persisted by the client, and perform a replay operation based on the write operation log persisted by the client; and
when the current state indicates that the target transaction is in a finalized state, obtain the third write operation log, and perform the replay operation based on the third write operation log.

7. The database system according to claim 6, wherein
the coordinator node is further configured to: when the current state indicates that the target transaction is in the committed state, obtain, based on the write operation log persisted by the client, the fourth write operation log for which the participant node is responsible, and send the fourth write operation log to the participant node; and
the participant node is further configured to persist the fourth write operation log based on the storage resource.

8. The database system according to claim 5, wherein the participant node is specifically configured to:
when the current state indicates that the participant node has persisted a write operation log of the target transaction, perform a replay operation based on the fourth write operation log;
when the current state indicates that the participant node does not persist the write operation log of the target transaction, if receiving, within specified duration, the fourth write operation log for which the participant node is responsible, perform the replay operation based on the fourth write operation log; and
when the current state indicates that the participant node does not persist the write operation log of the target transaction, and the fourth write operation log for which the participant node is responsible is not received within the specified duration, after receiving a write request of the client, send, to the client, a write response that indicates to re-execute the target transaction.

9. The database system according to any one of claims 3 to 8, wherein
the coordinator node is further configured to: when the target transaction is finalized, send a reclaiming request for storage space to the client, wherein the reclaiming request carries indication information of the storage space; and
the client is further configured to reclaim the storage space based on the reclaiming request.

10. The database system according to claim 9, wherein the indication information is an address of the storage space.

11. A data management method for a database system, wherein the database system comprises a client, a plurality of database nodes, and a storage resource, the plurality of database nodes comprise a first database node, and the method comprises:
sending, by the client, a first write request of a target transaction to the first database node, wherein the first write request indicates to-be-written first data;
sending, by the first database node, a first write response to the client based on the first write request, wherein the first write response carries a first write operation log of the first data; and
persisting, by the client, the first write operation log based on the storage resource.

12. The method according to claim 11, wherein the plurality of database nodes further comprise a second database node, and the method further comprises:
sending, by the client, a second write request of the target transaction to the second database node, wherein the second write request indicates to-be-written second data; and
sending, by the second database node, a second write response to the client based on the second write request, wherein the second write response carries a second write operation log of the second data; and
persisting, by the client, the first write operation log based on the storage resource comprises:
persisting, by the client, the first write operation log and the second write operation log in a batch based on the storage resource.

13. The method according to claim 11 or 12, wherein the plurality of database nodes comprise a coordinator node and a participant node, and the method further comprises:
providing, by the client, all write operation logs of the target transaction for the coordinator node;
obtaining, by the coordinator node based on all the write operation logs, a third write operation log for which the coordinator node is responsible, and persisting the third write operation log based on the storage resource;
obtaining, by the coordinator node based on all the write operation logs, a fourth write operation log for which the participant node is responsible, and sending the fourth write operation log to the participant node; and
persisting, by the participant node, the fourth write operation log based on the storage resource.

14. The method according to claim 13, wherein the method further comprises:
providing, by the client, storage addresses of all the write operation logs for the coordinator node.

15. The method according to claim 13 or 14, wherein the method further comprises:
when the target transaction needs to be recovered, obtaining, by any one of the plurality of data nodes, a current state of the target transaction, and executing a process of recovering the target transaction based on the current state.

16. The method according to claim 15, wherein executing, by the coordinator node, the process of recovering the target transaction based on the current state comprises:
when the current state indicates that the target transaction is in an inProgress state, after a write request is received from the client, sending, to the client, a write response that indicates to re-execute the target transaction;
when the current state indicates that the target transaction is in a committed state, obtaining a write operation log persisted by the client, and performing a replay operation based on the write operation log persisted by the client; and
when the current state indicates that the target transaction is in a finalized state, obtaining the third write operation log, and performing the replay operation based on the third write operation log.

17. The method according to claim 16, wherein the method further comprises:
when the current state indicates that the target transaction is in the committed state, obtaining, by the coordinator node based on the write operation log persisted by the client, the fourth write operation log for which the participant node is responsible, and sending the fourth write operation log to the participant node; and
persisting, by the participant node, the fourth write operation log based on the storage resource.

18. The method according to claim 15, wherein executing, by the participant node, the process of recovering the target transaction based on the current state comprises:
when the current state indicates that the participant node has persisted a write operation log of the target transaction, performing a replay operation based on the fourth write operation log;
when the current state indicates that the participant node does not persist the write operation log of the target transaction, if the fourth write operation log for which the participant node is responsible is received within specified duration, performing the replay operation based on the fourth write operation log; and
when the current state indicates that the participant node does not persist the write operation log of the target transaction, and the fourth write operation log for which the participant node is responsible is not received within the specified duration, after a write request of the client is received, sending, to the client, a write response that indicates to re-execute the target transaction.

19. The method according to any one of claims 13 to 18, wherein after persisting, by the participant node, the fourth write operation log based on the storage resource, the method further comprises:
when the target transaction is finalized, sending, by the coordinator node, a reclaiming request for storage space to the client, wherein the reclaiming request carries indication information of the storage space; and
reclaiming, by the client, the storage space based on the reclaiming request.

20. The method according to claim 19, wherein the indication information is an address of the storage space.

21. A computing device cluster, comprising a plurality of computing devices, wherein the plurality of computing devices comprise a plurality of processors and a plurality of memories, the plurality of memories store program instructions, and the plurality of processors run the program instructions, to enable the computing device cluster to perform the method according to any one of claims 11 to 20.

22. A computer-readable storage medium, comprising program instructions, wherein when the program instructions are run on a computing device, the computing device is enabled to perform the method according to any one of claims 11 to 20.
